(19) Europäisches Patentamt / European Patent Office / Office européen des brevets

(11) **EP 3 010 865 B1**

(12) **EUROPÄISCHE PATENTSCHRIFT**

(45) Veröffentlichungstag und Bekanntmachung des Hinweises auf die Patenterteilung:
**09.11.2016  Patentblatt 2016/45**

(21) Anmeldenummer: **14753234.5**

(22) Anmeldetag: **14.08.2014**

(51) Int Cl.:
*C03C 3/097* (2006.01)          *C03C 10/00* (2006.01)

(86) Internationale Anmeldenummer:
**PCT/EP2014/067427**

(87) Internationale Veröffentlichungsnummer:
**WO 2015/024858 (26.02.2015 Gazette 2015/08)**

(54) **GLAS UND GLASKERAMIK**

GLASS AND GLASS CERAMIC

VERRE ET VITROCÉRAMIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.08.2013  DE 102013216736**

(43) Veröffentlichungstag der Anmeldung:
**27.04.2016  Patentblatt 2016/17**

(73) Patentinhaber: **SCHOTT AG**
**55122 Mainz (DE)**

(72) Erfinder:
• **GABEL, Falk**
**65388 Schlangenbad (DE)**
• **WEISS, Evelin**
**55131 Mainz (DE)**
• **BUG, Michael**
**64367 Muehltal (DE)**
• **SIEBERS, Friedrich**
**55283 Nierstein (DE)**
• **JOHANSSON, Thoralf**
**55268 Nieder-Olm (DE)**

(74) Vertreter: **Mehler Achler**
**Patentanwälte Partnerschaft mbB**
**Bahnhofstraße 67**
**65185 Wiesbaden (DE)**

(56) Entgegenhaltungen:
**EP-A1- 1 146 018          EP-A1- 1 837 312**
**DE-A1-102010 032 113**

• **ULRICH SCHIFFNER ET AL: "Nucleation in a precursor glass for a Li2O-Al2O3-SiO2 glass ceramic", GLASTECHNISCHE BERICHTE,, Bd. 60, Nr. 7, 1. Januar 1987 (1987-01-01) , Seiten 239-247, XP001261181,**

**Beschreibung**

Die Erfindung betrifft ein Glas und eine Glaskeramik gemäß den Oberbegriffen der Ansprüche 1 und 2 sowie 4 und 5.

Es ist generell bekannt, dass sich Gläser aus dem System $Li_2O$-$Al_2O_3$-$SiO_2$ in Glaskeramiken mit Hochquarz-Mischkristallen und/oder Keatit-Mischkristallen als Hauptkristallphasen umwandeln lassen. Die dazu bekannten Keramisierungsprozesse sind in einer ganzen Reihe von Veröffentlichungen beschrieben. Es handelt sich um einen Temperaturprozess, durch den das Ausgangsglas durch gesteuerte Kristallisation in den glaskeramischen Artikel überführt wird. Diese sogenannte Keramisierung erfolgt bekanntermaßen in einem zweistufigen Temperaturprozess, bei dem typischerweise zunächst durch eine isotherme Keimbildung bei einer Temperatur zwischen 680°C und 810°C Keime, üblicherweise aus $ZrO_2$/$TiO_2$-Mischkristallen, erzeugt werden. Auch $SnO_2$ kann an der Keimbildung beteiligt sein.

Bei anschließender Temperaturerhöhung wachsen die Hochquarz-Mischkristalle auf diesen Keimen auf. Hohe Kristallwachstumsgeschwindigkeiten, wie sie für eine wirtschaftliche schnelle Keramisierung gewünscht sind, werden je nach Materialzusammensetzung bei Temperaturen von 800°C bis 950°C erreicht. Typisch für eine schnelle Keramisierung, d.h. eine kurze Keramisierungsdauer, sind hohe Maximaltemperaturen. Diese liegen üblicherweise über 880°C und gewährleisten, dass trotz kurzer Verweildauer in diesem Bereich ein signifikantes Kristallwachstum stattfinden kann.

Bei der Maximaltemperatur wird das Gefüge der Glaskeramik homogenisiert und die optischen, physikalischen und chemischen Eigenschaften feinjustiert. Falls erwünscht, können die Hochquarz-Mischkristalle anschließend noch in Keatit-Mischkristalle umgewandelt werden. Die Umwandlung in Keatit-Mischkristalle erfolgt bei Temperaturerhöhung in einem Temperaturbereich von ca. 970 bis 1250°C. Mit der Umwandlung erhöht sich der thermische Ausdehnungskoeffizient der Glaskeramik und durch weiteres Kristallwachstum tritt Lichtstreuung verbunden mit transluzentem bis opakem Aussehen auf.

An die Glaskeramiken und die dazugehörigen Herstellungsverfahren, insbesondere an das Keramisierungsverfahren, werden eine Reihe von Anforderungen gestellt, wobei die Umweltfreundlichkeit zunehmend an Bedeutung gewinnt.

Die Umweltfreundlichkeit beruht darauf, dass die Glaskeramik technisch frei ist von den üblichen Läutermitteln Arsen- und Antimonoxid. Als Verunreinigung liegen diese Komponenten üblicherweise in Gehalten von weniger als 500 ppm in der Regel weniger als 200 ppm vor. In Ausnahmefällen kann der $As_2O_3$-Gehalt maximal 1000 ppm betragen, wenn bei der Schmelze Scherben einer transparenten Glaskeramik mit Arsenoxid als Läutermittel zugesetzt werden. Da mit diesem Recycling durch Energie- und Rohstoffeinsparung ein wirksamer Beitrag zum Umweltschutz geleistet wird, ist in diesem Fall ein höherer $As_2O_3$-Gehalt bis zu 1000 ppm zulässig.

Die günstigen Fertigungseigenschaften beinhalten niedrige Schmelz- und Formgebungstemperaturen, Entglasungsfestigkeit und schnelle Keramisierbarkeit.

Für die wirtschaftliche Keramisierung sind kurze Keramisierungszeiten und niedrige Maximaltemperaturen, d.h. also insgesamt niedrige Energiebedarfe gewünscht, wobei die Transparenz der Glaskeramik nicht durch Färbung und Streuung leiden darf.

Bei den Anwendungen transparenter Glaskeramiken wird in der Regel eine hohe Transparenz, das heißt Lichttransmission (brightness Y) im Sichtbaren größer als 84 % und eine geringe Farbe (Buntheit) C*, also eine neutraler Farbton gewünscht.

Weiterhin soll keine visuell störende Lichtstreuung auftreten, die sich als Trübung (haze) bemerkbar macht.

Absorption und Streuung sind daher die optischen Phänomene, die bei wirtschaftlicher Herstellung beherrscht werden müssen.

Durch den Einsatz von Arsenoxid als Läutermittel werden die Anforderungen an eine besonders hohe Transparenz (hohe Lichttransmission und geringe Farbe) und eine besonders günstige Umwandlungskinetik der Glaskeramik zwar erfüllt aber nicht die Anforderungen an die Umweltfreundlichkeit.

Die bräunliche Färbung transparenter Lithiumaluminiumsilikat-Glaskeramiken hat verschiedene Ursachen, die hauptsächlich auf Absorptionsmechanismen und auf Streuung beruhen.

Die Anforderung an Umweltfreundlichkeit wird z.B. durch die Verwendung von $SnO_2$ anstelle von $As_2O_3$ als umweltfreundliches Läutermittel erfüllt, allerdings bewirken die entstehenden Sn/Ti-Komplexe jedoch eine zusätzliche Absorption zu den Fe/Ti-Farbkomplexen.

In den Gemengerohstoffen für die Schmelzen ist das färbende Element Fe als Verunreinigung enthalten. Dieses färbt ionisch als $Fe^{3+}$ sowie über Fe/Ti-Farbkomplexe. Wegen der hohen Kosten eisenarmer Rohstoffe ist es unwirtschaftlich den $Fe_2O_3$-Gehalt auf Werte von 100 ppm und darunter zu verringern. Der stärkste Absorptionsmechanismus transparenter Glaskeramiken sind elektronische Übergänge an Farbkomplexen, die im kurzwelligen Bereich des sichtbaren Lichtes absorbieren und an denen die für die Keimbildung wirksame Komponente $TiO_2$ beteiligt ist. Ein Farbkomplex entsteht durch die Bildung von benachbarten Fe- und Ti-Ionen, zwischen denen elektronische Charge-Transfer-Übergänge stattfinden.

Die Fe/Ti-Farbkomplexe führen zu einer rotbraunen, die Sn/Ti-Farbkomplexe zu einer gelbbraunen Färbung.

Die Sn/Ti-Farbkomplexe färben stärker und dieser Umstand hat bei transparenten Glaskeramiken bisher die Substitution des Läutermittels Arsenoxid durch $SnO_2$ erschwert. Die Bildung der genannten Farbkomplexe findet maßgeblich bei der Keramisierung statt.

Die Streuung in transparenten Glaskeramiken wird maßgeblich durch die Kristallitgröße und die unterschiedlichen Brechungsindizes der Hochquarz-Mischkristalle und der Restglasphase und damit auch durch die Keramisierung bestimmt. Für die Minimierung der Lichtstreuung ist es erforderlich, die Brechungsindizes im Bereich des sichtbaren Lichtes anzugleichen. Die Kristallitgröße sollte deutlich kleiner sein als die Wellenlänge des sichtbaren Lichtes und die Doppelbrechung der Kristalle klein sein (Sakamoto et al. "Structural relaxation and optical properties in nanocrystalline β-quartz glass-ceramic", Journal of Non-Crystalline Solids 352 (2006) Seite 514-518).

Kleine Kristallitgrößen werden über eine hohe Keimdichte und eine geringe Maximaltemperatur der gesamten Keramisierung erreicht, die dazu führen, dass die aufwachsenden Hochquarz-Mischkristalle mit ihrer Größe unterhalb der Wellenlänge des sichtbaren Lichtes liegen. Typischerweise liegt die mittlere Kristallitgröße der Hochquarz-Mischkristalle im Bereich 20 bis 60 nm. Eine hohe Keimdichte setzt ausreichende Gehalte an Keimbildnern sowie ausreichende Keimbildungszeiten und kinetische Eigenschaften des Ausgangsglases während der Keramisierung voraus.

Für die Angleichung der Brechungsindizes im Bereich des sichtbaren Lichtes ist es erforderlich, günstige Zusammensetzungsbereiche und Keramisierungsbedingungen zu finden, weil die Zusammensetzung der Hochquarz-Mischkristalle und der Restglasphase eine Folge von Zusammensetzung und Keramisierungsbedingungen ist. Zu der sogenannten Restglasphase zählen dabei auch die Oberflächenschichten und nicht nur die Zwischenbereiche zwischen den einzelnen Kristalliten innerhalb des Bulk-Gefüges. Demzufolge sind auch die Brechzahlunterschiede von Oberflächenschicht und Bulkgefüge entscheidend für die Streuung der transparenten, farbarmen Glaskeramik.

Der wirksame Keimbildner $TiO_2$ ist nur mit Nachteilen bei der Schmelze und Formgebung durch die alternativen Keimbildner $ZrO_2$ und $SnO_2$ zu ersetzen. Das bedeutet, dass die gewünschten niedrigen Schmelztemperaturen und kurzen Keramisierungszeiten ohne visuell störende Streuung über die dafür benötigten Gehalte an $TiO_2$ zu einer verstärkten Färbung aufgrund der Farbkomplexe führen.

Für die Herstellung umweltfreundlicher transparenter Glaskeramiken ohne die Verwendung der Läutermittel Arsen- und Antimonoxid hat es zahlreiche Entwicklungsanstrengungen gegeben. Aus technischen und wirtschaftlichen Gründen konnten diese bisher nicht umgesetzt werden. Transparenz, das heißt hohe Lichttransmission und geringe Färbung ohne visuelle störende Streuung, konnten nicht mit günstigen Fertigungsbedingungen in Einklang gebracht werden.

Ein Ansatz sind Zusammensetzungen ohne den Keimbildner $TiO_2$, die zu Nachteilen bei der Herstellung führen.

So beschreibt die WO 2008/065167 A1 die Herstellung umweltfreundlicher transparenter Glaskeramiken ohne störende Färbung. Diese Glaskeramiken vermeiden den Zusatz von $TiO_2$ als Keimbildner und basieren auf einer Mischkeimbildung durch $ZrO_2$ und $SnO_2$. Die für ausreichend schnelle Keimbildung notwendigen $ZrO_2$- Gehalte betragen 2 - 5 Gew.-% und die $SnO_2$-Gehalte > 0,4 - 3 Gew.-%. Bei diesen hohen Gehalten an $ZrO_2$ und $SnO_2$ wird das Einschmelzen des Gemenges verlangsamt, es erhöhen sich die Schmelz- und Formgebungstemperaturen und es verschlechtert sich die Entglasungsfestigkeit des Glases. Bei der Formgebung, die bei Viskositäten um die Verarbeitungstemperatur $V_A$ von $10^4$ dPas stattfindet, kristallisieren störende Sn- und Zr- haltige Kristallphase aus. Dies führt dazu, dass der nachfolgende Keramisierungsprozess nahezu nicht mehr über die Temperaturführung kontrolliert werden kann. Außerdem erfordern derartige Zusammensetzungen außergewöhnlich hohe Keramisierungstemperaturen und stellt damit ein unwirtschaftliches Verfahren dar.

Ein weiterer Ansatz sind transparente Glaskeramiken ohne Arsen- und Antimonoxid als Läutermittel mit geringen Gehalten an $TiO_2$ die aber auch höhere Gehalte an $SnO_2$ und $ZrO_2$ als Keimbildner erfordern. In der WO 2008/065166 A1 ist $TiO_2$ auf 0,3 - <1,6 Gew.-% begrenzt. Es werden Gehalte an $SnO_2$ von 0,25 - 1,2 Gew.-% und $ZrO_2$ von >2 - 3,8 Gew.-% benötigt. Diese hohen Gehalte gehen mit den beschriebenen Nachteilen bei der Schmelze und Formgebung sowie mangelnder Entglasungsfestigkeit einher.

Die Schriften JP 11-228180 A2 und JP 11-228181 A2 beschreiben umweltfreundliche Zusammensetzungen transparenter Glaskeramiken. Um ohne Verwendung von Arsenoxid als Läutermittel ausreichende Blasenqualitäten zu erreichen enthält die Glaskeramik eine Kombination der Läutermittel 0,1 - 2 Gew.-% $SnO_2$ und Cl. Das physikalische Entfärbungsmittel $Nd_2O_3$ wird nicht eingesetzt, so dass der Sn/Ti- Farbkomplex voll zum Tragen kommt. Insbesondere die in den Ausführungsbeispielen aufgezeigten hohen $SnO_2$-Gehalte sind sehr schädlich für die Entglasungsfestigkeit. Die Schriften liefern keine Hinweise wie der $SnO_2$-Gehalt begrenzt werden muss, um ausreichende Entglasungsfestigkeit sicherzustellen. Weiterhin liefern diese Schriften keinen Hinweis für die Optimierung der Fertigungseigenschaften durch die Wahl der Komponenten CaO und SrO und die Einstellung von Kristallzusammensetzung und Zusammensetzung der Restglasphase durch die Verhältnisse der zweiwertigen Komponenten MgO, ZnO sowie CaO, SrO und BaO.

Die physikalische Entfärbung von transparenten Glaskeramiken durch Zusätze von $Nd_2O_3$ und CoO, die im längerwelligen roten Spektralbereich absorbieren, ist in der EP 1 837 312 A1 offenbart. Die Schrift beschreibt vorzugsweise mit Arsenoxid geläuterte Zusammensetzungen. Neben der Verwendung von Arsenoxid wird auch die Verwendung von 0,1 - 0,4 Gew.-% $SnO_2$ in Verbindung mit Hochtemperaturläuterung größer 1700 °C als umweltfreundliches Läutermittel offenbart. Diese Schrift liefert keine Hinweise wie die Zusammensetzung beschaffen sein muss, um besonders günstige Fertigungsbedingungen d.h. niedrige Schmelz- und niedrige Formgebungstemperaturen zu erreichen. Es besteht daher Bedarf, die Schmelz- und Formgebungstemperaturen ohne Nachteile bei der Keramisierungsgeschwindigkeit abzusenken, weil sie für die Energieeffizienz und wirtschaftliche Herstellung von entscheidender Bedeutung sind.

Allen diesen zitierten Schriften ist gemeinsam, dass sie einen zweistufigen Keramisierungsprozess beschreiben.

Die Keramisierungsprogramme, die in EP 1 837 312 B1 und EP 1 837 314 B1 beschrieben werden und durch Prozesszeiten unter 2 Stunden gekennzeichnet sind, weisen nach den erforderlichen Aufheizphasen Keramisierungsschritte mit Haltezeiten bei z.B. 790°C und 900°C in der Größenordnung von 5 - 30 Minuten auf. Es handelt sich bei den bekannten Keramisierungsverfahren im Wesentlichen um isotherme Keramisierungsverfahren.

Es hat sich gezeigt, dass es für jede Glaszusammensetzung aufwändiger Versuche bedarf, um die Verfahrensparameter so aufeinander abzustimmen, dass die Glaskeramik die gewünschten Eigenschaften, insbesondere hinsichtlich Farbe und Streuung, aufweist. Die Versuche sind zeit- und kostenintensiv.

Es ist Aufgabe der Erfindung, eine Glaszusammensetzung für die Herstellung einer Glaskeramik anzugeben, die für vorgegebene C*- und S-Werte ein möglichst großes Prozessfenster beim Keimbildungsprozess, insbesondere hinsichtlich der Verweildauern in dem für die Keimbildung relevanten Temperaturbereich, aufweist.

Diese Aufgabe wird mit einem Glas gemäß Anspruch 1 gelöst. Das Glas ist dadurch gekennzeichnet, dass es folgende Komponenten (in Gew.-%) enthält:

| | |
|---|---|
| $Al_2O_3$ | 19 - 23 |
| $Fe_2O_3$ | 0,01 - 0,02 |
| $Li_2O$ | 3,2 - 4,2 |
| $P_2O_5$ | 0,01 - < 1,6 |
| $SiO_2$ | 64 - 68 |
| $SnO_2$ | 0 - 0,5 |
| $TiO_2$ | 1,6 - 2,5 |
| $ZnO$ | 1,0 - 2,5 |
| $ZrO_2$ | 1,2 - 2,0 |

wobei eine Bedingung B1 gilt:

$$20 < (Li_2O + Al_2O_3 + SiO_2) / (SnO_2 + TiO_2 + ZrO_2 + Fe_2O_3) < 25$$

und eine Bedingung B2 gilt:

$$21 < (Li_2O + Al_2O_3 + SiO_2 + ZnO + P_2O_5) / (SnO_2 + TiO_2 + ZrO_2 + Fe_2O_3) < 26.$$

Ein bevorzugter Bereich für B1 ist 21 bis 25, insbesondere 22 bis 25.

Die erfindungsgemäße Glaskeramik ist Gegenstand des Anspruchs 2.

Die Transparenz, die sich nach der Keramisierung einstellt, soll möglichst hoch sein. Sie wird charakterisiert durch die Analyse der Lichttransmission, welche im CIE-Farbsystem gemessen und typischerweise als Y (brightness) bezeichnet wird. Unter einer transparenten Glaskeramik wird eine Glaskeramik mit einem Y-Wert > 80 verstanden.

Darüber hinaus wird bei Glaskeramiken als Maß für die Färbung die Größe C* (Buntheit, Farbe) aus dem CIELAB-Farbsystem mit den Koordinaten L*, a* und b* verwendet.

Unter C* wird ein Farbort im CIE-LAB System verstanden, der als Radiusvektor $c_{ab}* = \sqrt{a*^2 + b*^2}$ definiert ist.

a* gibt die Lage des Farbortes auf der Grün-/Rot-Achse an, wobei negative Werte Grüntönen und positive Werte Rottönen entsprechen. b* gibt die Lage des Farbortes auf der Blau-/Gelb-Achse an, wobei negative Werte Blautönen und positive Werte Gelbtönen entsprechend.

Die Anforderungen an die Streuung der Glaskeramik leiten sich aus der ASTM D1003 (CIE Illuminant A; Method: Procedure B, Diffuse Illumination/Unidirectional Viewing) ab. Die Streuung wird oft auch als Haze bezeichnet. Sie soll im repräsentativen mittleren Bereich der jeweiligen Probe weniger als 3% betragen.

Allerdings ist die Auflösung des dieser Norm hinterlegten Messverfahrens nicht präzise genug, um Werte unterhalb von 3% eindeutig und reproduzierbar voneinander zu unterscheiden.

Daher wird die Streuung für die hier beschriebenen verfahrensgemäß hergestellten Glaskeramiken bei Durchsicht über die polierten Kanten einer langen Glaskeramikprobe visuell bewertet.

Unter dem visuell bestimmbaren Streuwert S wird folgendes verstanden:

Die Streuung wird in Durchsicht über die polierten Kanten einer 2 cm langen und 4 mm dicken polierten Glaskeramikprobe visuell bewertet. Dazu werden die Proben mittels Tageslicht ausgeleuchtet und derart auf einen schwarzen Hintergrund gestellt, dass über die 2 cm lange Distanz geschaut werden kann. Der schwarze Hintergrund dient dazu, die Vergleichbarkeit der visuellen Eindrücke sicherzustellen.

Als Referenz-Grenzmuster für die visuelle Bewertung der Streuung in Durchsicht dienen zehn keramisierte, arsengeläuterte Glaskeramik-Proben der Glaskeramik ROBAX® (Marke der SCHOTT AG), die gezielt so keramisiert wurden, dass jeweils unterschiedliche Streuung generiert wurde. Die Unterschiede in der Streuung wurden so eingestellt, dass diese visuell durch einen Beobachter gerade noch zu unterscheiden ist. Diese Grenzmuster-Referenz-Proben werden mit der zu bewertenden Probe verglichen. Die Grenzmuster-Referenz-Probe, deren Streuung der zu bewertenden Probe am nächsten kommt, ist das Maß für die Quantifizierung der Streuung.

Die über Grenzmuster bestimmte Streuung reicht von einer Skala 0 (keine Streuung), über 1 (sehr geringe Streuung wie bei einem Referenz-Grenzmuster der Glaskeramik ROBAX® der Firma SCHOTT AG), 2 (geringe Streuung wie bei dem zweiten Grenzmuster der Glaskeramik ROBAX® der Firma SCHOTT AG) bis 3 (transluzentes milchiges Aussehen). Werte ab 3 werden für die Anforderungen des Marktes als nachteilig angesehen, weil die Streuung bei bestimmten Lichtverhältnissen bereits visuell störend sein kann.

Diese Werte ab 3 entsprechen einer Streuung von 3%, die gemäß dem oben beschriebenen Messverfahren bestimmt wurde.

Zur Absicherung des Ergebnisses dieser Vorauswahl kann die visuelle Beurteilung zur präziseren Unterscheidung mit Proben wiederholt werden, bei denen die Streuung in Durchsicht über die polierten Kanten einer 7 cm langen und 4 mm dicken polierten Glaskeramikprobe visuell bewertet wird. Auch hier wird die Streuung wieder anhand einer Skala von 0 bis 3 beurteilt.

Das Prozessfenster der Verweildauern $t_{KBA}$ im für die Keimbildung relevanten Temperaturbereich hängt von der Wahl der C*- und S-Werte ab und verringert sich, je kleiner die betreffenden Werte vorgegeben werden. Für C*-Werte im Bereich von 4 bis 5 wird ein Prozessfenster, insbesondere ein solches größer 10 min, vorzugsweise größer 20 min, als großes Prozessfenster verstanden.

Für S-Werte im Bereich von 1 bis 2 wird ein Prozessfenster, insbesondere ein solches größer 20 min, vorzugsweise größer 30 min, als großes Prozessfenster verstanden.

Ein großes Prozessfenster hat den Vorteil, dass bei der Durchführung des Keramisierungsprozesses, insbesondere des Keimbildungsprozesses, Prozessschwankungen, wie sie für schnelle, energieeffiziente industrielle Herstellungsverfahren typisch sind, kompensiert werden können, ohne dass sich dies negativ auf die zu erzielenden Produkteigenschaften wie in diesem Fall C* und S auswirkt. Darüber hinaus werden Ofenstörungen wie z. B. Temperaturüberschwinger, die für Aufheizphasen üblicherweise als Risiko vorhanden sind, kompensiert, ohne dass C* und S signifikant beeinflusst werden. Zusätzlich hat sich gezeigt, dass die Verwendung von konstanten Heizraten anstelle von isothermen Bereichen hier enorme Vorteile bietet, um beispielsweise auch unterschiedliche Ausgangszustände der zu keramisierenden Gläser zu kompensieren.

Der für die Keimbildung relevante Temperaturbereich liegt vorzugsweise bei T1 = 680°C bis T2 = 810°C.

Es hat sich herausgestellt, dass bei der erfindungsgemäßen Glaszusammensetzung große Prozessfenster der Verweildauern zur Verfügung stehen, die z. B. für C* = 5 mehr als 200 min und für S = 2 mehr als 200 min betragen.

Es hat sich gezeigt, dass die Größe der Prozessfenster im Wesentlichen durch die Anteile der Kristallbildner wie $Li_2O$, $Al_2O_3$ und $SiO_3$ und der Keimbildner wie $SnO_2$, $TiO_2$, $ZrO_2$ und $Fe_2O_3$ bestimmt werden, wobei Kristallbildner und Keimbildner bestimmte Verhältnisse (Bedingung B1) erfüllen müssen.

Bei Abweichungen von den beanspruchten Mengenbereichen der genannten Komponenten werden deutliche Verringerungen der Größe der Prozessfenster festgestellt.

Bei der Unterschreitung des unteren Grenzwertes 20 und bei Überschreitung des oberen Grenzwertes 25 verringert sich ebenfalls die Größe der Prozessfenster.

Ein Mindestgehalt an $Li_2O$ von 3,2 Gew.-% ist für eine hohe Keramisierungsgeschwindigkeit und für die Erniedrigung der $10^2$-Temperatur und der Verarbeitungstemperatur $V_A$ vorteilhaft. Höhere Gehalte als 4,2 Gew.-% sind wegen der hohen Kosten von Li-Rohstoffen wirtschaftlich nachteilig. Ein Gehalt von weniger als 4 Gew.-% ist besonders vorteilhaft.

Um höhere Viskositäten des Ausgangsglases und die unerwünschte Entglasung von Mullit bei der Formgebung zu vermeiden, ist der $Al_2O_3$-Gehalt auf maximal 23 Gew.-% begrenzt. Der Mindestgehalt für die Bildung ausreichender Mengen der Hochquarz-Mischkristallphase beträgt 19 Gew.-% bevorzugt 20 Gew.-%.

Der $SiO_2$-Gehalt soll maximal 68 Gew.-% betragen, weil diese Komponente die Viskosität des Glases und damit $V_A$ und die $10^2$-Temperatur stark erhöht. Für gutes Einschmelzen der Gläser und für niedrige Schmelz- und Formgebungstemperaturen sind höhere Gehalte von $SiO_2$ unwirtschaftlich.

Der Gehalt an $SiO_2$ soll mindestens 64 Gew.-% betragen, weil dies für die geforderten Eigenschaften, wie z.B. chemische Beständigkeit, Keramisierungsgeschwindigkeit und Transparenz vorteilhaft ist. Die Streuung wird durch hohe $SiO_2$-Gehalte vermindert, was darauf hindeutet, dass die Brechungsindizes von Kristallphase und Restglas besser angepasst werden. Bevorzugt ist ein $SiO_2$-Gehalt von 65 bis 68 Gew.-%.

Wegen der hohen Kosten eisenarmer Gemengerohstoffe ist es unwirtschaftlich den $Fe_2O_3$-Gehalt der Glases auf Werte unter 0,01 Gew.-% (100 ppm) einzustellen. Da auch beim Recycling von Scherben ein Eintrag von Eisen über die Zerkleinerung stattfindet, ist ein $Fe_2O_3$-Gehalt von größer als 0,01, insbesondere größer als 0,013 Gew.-% wirtschaftlich besonders vorteilhaft.

Andererseits erhöht sich mit dem $Fe_2O_3$-Gehalt der Glaskeramik auch die Konzentration der Fe/Ti-Farbkomplexe. Die Färbung (Buntheit C*) wird erhöht und durch Absorption wird die Lichttransmission Y (brightness) vermindert. Die Glaskeramik soll deswegen höchstens 0,02 Gew.-% enthalten.

Als Läutermittel ist 0 bis 0,5 Gew.-% $SnO_2$, bevorzugt 0,05 bis 0,5 Gew.-% $SnO_2$ enthalten.

Da $SnO_2$ auch als Keimbildner wirkt, verbreitert es die Prozessfenster im Temperaturbereich und verkürzt die benötigten Keramisierungszeiten. Die Komponente $SnO_2$ ist wegen der Entglasungsfestigkeit vorzugsweise auf Werte von höchstens 0,5 Gew.-% begrenzt. Höhere Gehalte führen zur Kristallisation von Sn-haltigen Kristallphasen an den Kontaktmaterialien (z.B. Pt/Rh) bei der Formgebung und sind zu vermeiden. Wegen der Bildung von Sn/Ti- Farbkomplexen ist der Gehalt an $SnO_2$ möglichst gering zu wählen und die mindestens benötigte Menge wird durch die Forderung nach ausreichender Läuterwirkung bestimmt.

Eine Mindestmenge von 0,08 Gew.-% ist für eine ausreichende Läuterwirkung zweckmäßig. Der Gehalt an $SnO_2$ sollte zur Verbesserung der Entglasungsfestigkeit und wegen der Färbung durch Sn/Ti-Farbkomplexe auf vorzugsweise 0,16 Gew.-% begrenzt werden.

Dies ist vorzugsweise mit einer Färbung C* von kleiner als 5 in der Glaskeramik verbunden. Bevorzugt werden Werte von kleiner als 4,5 und weiter kleiner als 4 erreicht. Eine Hochtemperaturläuterung von mindestens 1800 °C erlaubt höhere Wannendurchsätze, weil die Freisetzung des Läutersauerstoffs beschleunigt ist. Allerdings können höhere Läutertemperaturen die Bildung von $Sn^{2+}$ sowie $Fe^{2+}$ und damit die Konzentration der Farbkomplexe erhöhen, so dass hier eine weitere Optimierung erforderlich ist.

Die $Li_2O$-$Al_2O_3$-$SiO_2$ und auch die $Li_2O$-$Al_2O_3$-$SiO_2$-$ZnO$-$P_2O_5$-Gehalte bestimmen sowohl die Struktur und Zusammensetzung der Restglasphase als auch der Kristalle (Hoch-Quarz-Mischkristalle), die über die Keramisierung in einer Glaskeramik erzeugt werden. Voraussetzung für eine gesteuerte Kristallisation/Keramisierung sind die sogenannten Keimbildneroxide, nämlich $SnO_2$-$TiO_2$-$ZrO_2$-$Fe_2O_3$, die als Nanokristalle über den Keimbildungs- oder Keimbildnerausscheidungsprozess erzeugt werden und die als Kristallisationszentren für die Kristalle (Hoch-Quarz-Mischkristalle) dienen. Die Streuung in Glaskeramiken wird im Wesentlichen durch das Gefüge, d. h. den Phasengehalt von Kristall- und Restglasphasen, sowie durch die Brechzahlunterschiede der im Gefüge vorhandenen Phasen bestimmt. Somit kommt sowohl den Gehalten an Keim- und Kristall-/Restglasphasenbildnern als auch dem Keimbildungsprozess eine entscheidende Bedeutung bei der Einstellung der Streuung zu. Diese wird somit sowohl durch die Zusammensetzung, speziell durch die oben genannten Verhältnisse, als auch durch den Keimbildungs- oder Keimbildnerausscheidungsprozess gesteuert.

Hinsichtlich der Lösungen gemäß der Ansprüche 1 und 2 gilt eine Bedingung B2:

$$21 < (Li_2O + Al_2O_3 + SiO_2 + ZnO + P_2O_5) / (SnO_2 + TiO_2 + ZrO_2 + Fe_2O_3) < 26.$$

Bei Einhaltung des Bereichs 22 bis 26 zeigte sich nochmals eine Vergrößerung der Prozessfenster für vorgegebene C*- und S-Werte.

Bei der Unterschreitung des unteren Grenzwertes 22 und bei Überschreitung des oberen Grenzwertes 26 verringert sich die Größe der Prozessfenster.

Ein bevorzugter Bereich für B2 ist 23 bis 26.

Um gleichzeitig auch eine minimale Färbung, hier quantifiziert über C*, zu gewährleisten, müssen die färbenden Bestandteile der Glaskeramik sowohl hinsichtlich ihrer Gehalte als auch hinsichtlich ihrer zur Färbung führenden Wechselwirkung minimal gehalten werden. Als färbende Bestandteile sind die Oxide $SnO_2$-$TiO_2$-$ZrO_2$-$Fe_2O_3$ bekannt. Mindestgehalte benötigt man aber, um einen effizienten Keimbildungs- oder Keimbildnerausscheidungsprozess zu gewährleisten. Dafür sind die Verhältnisse von $SnO_2$-$TiO_2$-$ZrO_2$-$Fe_2O_3$ gegenüber $Li_2O$-$Al_2O_3$-$SiO_2$ bzw. auch $Li_2O$-$Al_2O_3$-$SiO_2$-$ZnO$-$P_2O_5$ ebenfalls relevant.

Eine bevorzugte Zusammensetzung des Glases oder der Glaskeramik enthält folgende Komponenten (in Gew.-%):

| | |
|---|---|
| $Al_2O_3$ | 21,0 - 21,7 |
| $As_2O_3$ | < 0,05 |
| BaO | 0,2 - 0,8 |
| CaO | 0,1 - 0,4 |
| $Fe_2O_3$ | 0,01 - 0,016 |
| $K_2O$ | 0,05 - 0,2 |
| $Li_2O$ | 3,6 - 3,9 |
| MgO | 0,5 - 0,8 |
| $Na_2O$ | 0,3 - 0,7 |
| $Nd_2O_3$ | 0,02 - 0,07 |
| $P_2O_5$ | 0,01 - 0,1 |
| $Sb_2O_3$ | < 0,05 |
| $SiO_2$ | 65,5 - 67,5 |
| $SnO_2$ | 0,08 - 0,16 |
| $TiO_2$ | 2,0 - 2,4 |
| ZnO | 1,6 - 1,9 |
| $ZrO_2$ | 1,6 - 1,9 |
| SrO | 0,3 - 0,7 |

Das Glas oder die Glaskeramik kann noch folgende Verunreinigungen mit Anteilen bis maximal 0,005 Gew.-% enthalten:

$$CoO, Cr_2O_3,, Cs_2O_3, CuO, MoO_3, NiO, PbO, Rb_2O_3, V_2O_5.$$

Das breite Prozessfenster bei der Keramisierung soll mit handelsüblichen Gemengerohstoffen erreicht werden. Diese haben ein gewisses Verunreinigungsniveau. Die Anteile der Verunreinigungen sollen aber 0,005 Gew.-% nicht übersteigen weil sie die Buntheit und die Streuung negativ beeinflussen können.

Diese Aufgabe wird auch mit einem LAS-Glas gelöst, dass dadurch gekennzeichnet ist, dass es folgende Komponenten (in Gew.-%) enthält:

| | |
|---|---|
| $Al_2O_3$ | 19 - 23 |
| $Fe_2O_3$ | 0,01 - 0,02 |
| $Li_2O$ | 3,2 - 4,2 |
| $P_2O_5$ | 0,01 - < 1,6 |
| $SiO_2$ | 64 - 68 |
| $SnO_2$ | 0 - 0,5 |
| $TiO_2$ | 1,5 - 3,0 |
| ZnO | 1,0 - 2,5 |
| $ZrO_2$ | 1,2 - 2,0 |
| MgO | 0,5 - 0,8 |

wobei eine Bedingung B3 gilt:

$$21 < (Li_2O + Al_2O_3 + SiO_2 + ZnO + P_2O_5 + MgO) / (SnO_2 + TiO_2 + ZrO_2 + Fe_2O_3) < 26.$$

Bei Einhaltung des Bereichs 21 bis 26 für B3 zeigte sich nochmals eine Vergrößerung der Prozessfenster für vorgegebene C*- und S-Werte.

Bei der Unterschreitung des unteren Grenzwertes 21 und bei Überschreitung des oberen Grenzwertes 26 verringert sich die Größe der Prozessfenster.

Ein bevorzugter Bereich für B3 ist 22 bis 26, insbesondere 23 bis 26.

Die erfindungsgemäße Glaskeramik ist Gegenstand des Anspruchs 6.

Es hat sich herausgestellt, dass auch bei dieser erfindungsgemäßen Glaszusammensetzung große Prozessfenster bezüglich der Verweildauern zur Verfügung stehen, die z. B. für C* = 5 mehr als 200 min und für S = 2 mehr als 200 min betragen.

Die Komponente MgO wird in die Hochquarz-Mischkristalle eingebaut. Ein MgO-Mindestgehalt von 0,5 Gew.-% ist vorteilhaft, weil diese Komponente die Viskosität der Glasschmelze bei hohen Temperaturen, also die Schmelztemperatur verringert. Diese Eigenschaft ist wichtig für die wirtschaftliche Herstellung.

Der MgO-Gehalt ist auf maximal 0,8 Gew.-% begrenzt. Höhere MgO-Gehalte sind nachteilig, weil sie den thermischen Ausdehnungskoeffizienten der Glaskeramik unzulässig erhöhen. Höhere Gehalte führen bei den angestrebten kurzen Keramisierungszeiten auch zu einer verstärkten Färbung C*.

Erfindungsgemäß enthält das Glas bzw. die Glaskeramik 0,01 bis 1,6 Gew.-% $P_2O_5$, bevorzugt 0,02 bis 1,6 Gew.-% $P_2O_5$, insbesondere 0,03 bis 1,6 Gew.-% $P_2O_5$.

Erfindungsgemäß gilt für die Obergrenze des $P_2O_5$-Gehaltes ein Wert von < 1,6 Gew.-%.

$P_2O_5$ wird in die Kristallite eingebaut und beeinflusst den Brechungsindex und damit die Streuung. Definierte Gehalte vorzugsweise zwischen 0,03 und 1,6 Gew.-% können den Brechungsindex der Kristalle näher an den des Restglases anpassen und damit die Streuung vermindern. Damit lässt sich der vorgegebene Streuwert S in einem größeren Prozessfenster realisieren.

Vorzugsweise enthält das Glas bzw. die Glaskeramik 0,05 bis 0,5 Gew.-% $SnO_2$.

Vorzugsweise enthält das Glas bzw. die Glaskeramik 0,01 bis 0,1 Gew.-% $Nd_2O_3$.

Der Zusatz von $Nd_2O_3$ führt zu einer Entfärbung und verringert die Buntheit C*. Damit lässt sich eine vorgegebene Buntheit C* in einem breiteren Prozessfenster erreichen.

Der Zusatz von SrO mit 0,05 bis 0,7 Gew.-%, bevorzugt 0,3 bis 0,7 Gew.-% verbessert die Schmelzbarkeit und die Entglasungsfestigkeit bei der Formgebung des Glases. Der Gehalt muss jedoch auf 0,7 Gew.-% begrenzt werden, weil diese Komponente nicht in die Kristallphase eingebaut wird, sondern in der Restglasphase der Glaskeramik verbleibt. Zu hohe Gehalte beeinträchtigen das Kristallisationsverhalten bei der Umwandlung des kristallisierbaren Ausgangsglases in die Glaskeramik. Außerdem wirken sich höhere Gehalte ungünstig auf die Farbe der Glaskeramik aus.

Ein Verfahren zur Ermittlung der Prozessfenster für ein Glas für die Herstellung einer Glaskeramik sieht vor, dass Glasproben im ersten Temperaturprozess unterschiedlichen Verweildauern $t_{KBA}$ im Temperaturbereich zwischen T1 und T2 unterworfen werden, dass nach Beendigung des Keramisierungsprozesses die C* - und die S - Werte der Glasproben bestimmt und den Verweildauern zur Erstellung von Meßkurven zugeordnet werden, und dass die Bereiche der Verweildauern $B_{C*}$ und $B_S$, in denen die C*- und die S- Werte gleich den vorgegebenen C*- und S-Werten sind oder unter den vorgegebenen C*- und S-Werten liegen, ausgewählt werden und ein Überschneidungsbereich $B_{Ü}$ der Bereiche $B_{C*}$ und $B_S$ bestimmt wird, in dem sowohl maximal der vorgegebene C*-Wert als auch maximal der vorgegebene S-Wert liegen, wobei $B_{Ü}$ das Prozessfenster für die Herstellung der Glaskeramiken bildet.

$B_{C*}$ und $B_S$ sind die Prozessfenster bezüglich der vorgegebenen C*- und S-Werte.

Um definiert unterschiedliche Verweildaueren $t_{KBA}$ zu erzeugen werden Keramisierungen mit unterschiedlichen konstanten Heizraten im Keimbildungsbereich verwendet. Dies hat den Vorteil, dass unabhängig vom optimalen Keimbildungs-Temperaturbereich die Verweildauern $t_{KBA}$ entsprechend der Heizrate skaliert werden. So verlängert sich z. B. bei einer Halbierung der Heizrate die Verweildauer in der Keimbildungsphase um den Faktor 2.

Das Verfahren hat den Vorteil, dass die Prozessfenster auf einfache Weise für vorgegebene C*- und S-Werte für eine vorgegebene Glaszusammensetzung bestimmt werden können. Mit dem Verfahren lässt sich auch erkennen, ob für einen gewünschten C*- bzw. S-Wert überhaupt ein Prozessfenster zur Verfügung steht bzw. ob das Prozessfenster groß genug ist, um bei einer großtechnischen Herstellung mit einem bestimmten Maß an Sicherheit die gewünschten C*- und S-Werte eingehalten werden können.

Das Verfahren zur Herstellung einer Glaskeramik unter Ausnutzung des Verfahrens zur Ermittlung der Prozessfenster sieht vor, dass Glasproben im ersten Temperaturprozess unterschiedlichen Verweildauern $t_{KBA}$ im Temperaturbereich zwischen T1 und T2 unterworfen werden, dass nach Beendigung des Keramisierungsprozesses die C* - und die S - Werte der Glasproben bestimmt und den Verweildauern $t_{KBA}$ zur Erstellung von Meßkurven zugeordnet werden, und dass die Bereiche der Verweildauern $B_{C*}$ und $B_S$, in denen die C*- und die S- Werte gleich den vorgegebenen C*- und S-Werten sind oder unter den vorgegebenen C*- und S - Werten liegen, ausgewählt werden und ein Überschneidungsbereich $B_{Ü}$ der Bereiche $B_{C*}$ und $B_S$ bestimmt wird, in dem sowohl maximal der vorgegebene C*-Wert als auch maximal der vorgegebene S-Wert liegen und dass die Herstellung der Glaskeramiken mit einer Verweildauer $t_{KBA}$ aus dem ausgewählten Überschneidungsbereich $B_{Ü}$ durchgeführt wird.

Es hat sich herausgestellt, dass die im Rahmen des Ermittlungsverfahrens erstellten Messkurven sich durch folgende Funktionen beschreiben lassen:

$$C^*(t_{KBA}) = \frac{a}{\sqrt{t_{KBA}}} + b \cdot (1 - e^{-ct_{KBA}}) + d$$

$$S(t_{KBA}) = \frac{a}{\sqrt{t_{KBA}}} + b \cdot t_{KBA} + c$$

Die Parameter a, b, c und d werden durch geeignete Fitverfahren aus den Messkurven ermittelt.

Hierbei hat sich gezeigt, dass insbesondere die C*-Messkurve und somit auch die dazugehörige Funktion C* ($t_{KBA}$) ein deutliches Minimum durchläuft.

Im Fall der S-Messkurve und der dazugehörigen Funktion S ($t_{KBA}$) ist das Minimum weniger stark ausgeprägt.

Die Bereiche $B_{C^*}$ und $B_S$ können mittels der Funktionen C*($t_{KBA}$) und S($t_{KBA}$) ermittelt werden.

Nach der Ermittlung der Funktionen lassen sich für unterschiedliche C*- und S-Werte die Prozessfenster $B_C$, $B_S$ und $B_Ü$ auf einfache Weise berechnen, ohne dass weitere Experimente durchgeführt werden müssen.

Ein Beispiel und ein Vergleichsbeispiel werden nachfolgend anhand der Diagramme der Figuren 1 bis 9 erläutert.

Es zeigen:

Figur 1    C* in Abhängigkeit von $t_{KBA}$ für ein erfindungsgemäßes Glas,

Figur 2    C* in Abhängigkeit der konstanten Heizrate für ein erfindungsgemäßes Glas,

Figur 3    Streuwert S in Abhängigkeit von $t_{KBA}$ für ein erfindungsgemäßes Glas,

Figur 4    Streuwert S in Abhängigkeit der konstanten Heizrate für ein erfindungsgemäßes Glas,

Figur 5    ein kombiniertes Diagramm mit C* und S in Abhängigkeit von $t_{KBA}$ gemäß einer ersten Ausführungsform,

Figur 6    ein kombiniertes Diagramm mit C* und S in Abhängigkeit von $t_{KBA}$ gemäß einer zweiten Ausführungsform,

Figur 7    C* in Abhängigkeit von $t_{KBA}$ für ein Vergleichsglas,

Figur 8    Streuwert S in Abhängigkeit von $t_{KBA}$ für ein Vergleichsglas und

Figur 9    ein kombiniertes Diagramm mit C* und S in Abhängigkeit von $t_{KBA}$ für ein Vergleichsglas.

Es wurden ein erfindungsgemäßes Glas (Beispiel) und ein Vergleichsglas (Vergleichsbeispiel) bezüglich ihrer Prozessfenster untersucht.

Die Zusammensetzungen der beiden Gläser sind in der nachfolgenden Tabelle 1 aufgeführt.

Tabelle 1 (Angaben in Gew.-%)

|  | Beispiel | Vergleichsbeispiel |
|---|---|---|
| $Al_2O_3$ | 21,3 | 22 |
| $As_2O_3$ | <0,005 | <0,005 |
| BaO | 0,52 | 1,19 |
| CaO | 0,24 | 0,035 |
| $Fe_2O_3$ | 0,013 | 0,013 |
| F | <0,05 | <0,05 |
| $K_2O$ | 0,11 | 0,29 |
| $Li_2O$ | 3,74 | 3,71 |
| MgO | 0,63 | 0,72 |
| $MnO_2$ | <0,005 | 0,001 |
| $Na_2O$ | 0,52 | 0,38 |
| $Nd_2O_3$ | 0,056 | <0,01 |
| $P_2O_5$ | 0,027 | 1,51 |

(fortgesetzt)

|  | Beispiel | Vergleichsbeispiel |
|---|---|---|
| $Sb_2O_3$ | <0,010 | <0,010 |
| $SiO_2$ | 66,48 | 65,5 |
| $SnO_2$ | 0,11 | 0,31 |
| $TiO_2$ | 2,2 | 2,08 |
| ZnO | 1,79 | <0,02 |
| $ZrO_2$ | 1,72 | 2,22 |
| SrO | 0,53 | <0,002 |
| Cl | Nicht gemessen | <0,02 |
| $HfO_2$ | 0,04 | 0,04 |

Die Fluor-Konzentration wurde Flammen-spektroskopisch, $Li_2O$ nasschemisch und die anderen Elemente mit Röntgenfluoreszenzspektroskopie bestimmt.

Die Verunreinigungen CoO, $Cr_2O_3$, $Cs_2O_3$, CuO, $MoO_3$, NiO, PbO, $Rb_2O_3$, $V_2O_5$ liegen bei den Gläsern unterhalb der Konzentration von 0,005 Gew.-%. Das gemessene $HfO_2$ wird als Verunreinigung über den $ZrO_2$-Rohstoff eingeschleppt.

Die jeweiligen Verhältnisse der Komponentensummen, entsprechend der Bedingungen B1 und B2, sind in der Tabelle 2 aufgeführt. Das erfindungsgemäße Glas hält die Bedingungen B1 und B2 ein, während das Vergleichsglas außerhalb dieser Bereiche liegt.

Tabelle 2

|  | Beispiel | Vergleichsbeispiel |
|---|---|---|
| $Li_2O + Al_2O_3 + SiO_2$ | 91,55 | 91,21 |
| $SnO_2 + TiO_2 + ZrO_2 + Fe_2O_3$ | 4,043 | 4,623 |
| Verhältnis B1 | 22,6 | 19,7 |
| $Li_2O + Al_2O_3 + SiO_2 + ZnO + P_2O_5$ | 93,367 | 92,72 |
| $SnO_2 + TiO_2 + ZrO_2 + Fe_2O_3$ | 4,043 | 4,623 |
| Verhältnis B2 | 23,1 | 20,1 |
| $Li_2O + Al_2O_3 + SiO_2 + ZnO + P_2O_5 + MgO$ | 94,0 | 93,44 |
| $SnO_2 + TiO_2 + ZrO_2 + Fe_2O_3$ | 4,043 | 4,623 |
| Verhältnis B3 | 23,25 | 20,21 |

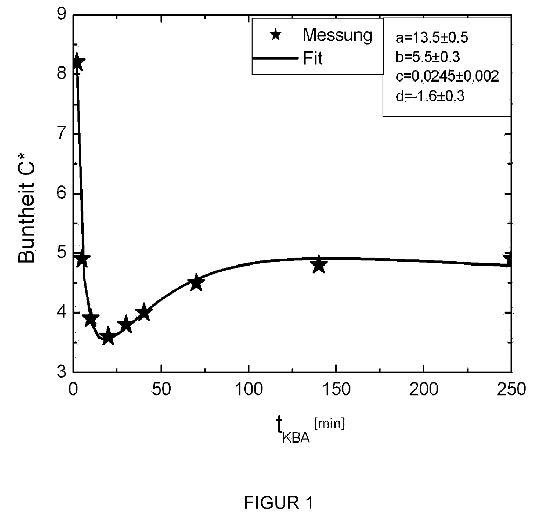

In der Figur 1 ist C* in Abhängigkeit von $t_{KBA}$ für das erfindungsgemäße Beispiel dargestellt.

Die Abhängigkeit der Buntheit C* von der Verweildauer $t_{KBA}$ lässt sich durch den Ansatz:

$$C^*(t_{KBA}) = \frac{a}{\sqrt{t_{KBA}}} + b \cdot (1 - e^{-ct_{KBA}}) + d$$

fitten. Der erste Term charakterisiert die Reduzierung des Farbwertes C* bei kleinen Verweildauern $t_{KBA}$, der zweite Term quantifiziert die Zunahme des Farbwertes bei langen Verweildauern $t_{KBA}$.

Der Parameter a ist ein Maß für die Änderung der Farbe bei kurzen Verweildauern $t_{KBA}$, die Parameter b und c beschreiben die Steilheit der Farbwertzunahme bei großen Verweildauern $t_{KBA}$.

Der Parameter d ist ein Offset-Parameter und entscheidet mit darüber, welcher minimale Farbwert erreicht werden kann.

Um das Prozessfenster $B_{C^*}$ für z. B. C* = 5 zu ermitteln, werden die Schnittpunkte der Konstanten bei C* = 5 und der Funktion C* (t$_{KBA}$) ermittelt bzw. aus der Funktion C* (t$_{KBA}$) errechnet. Für das Prozessfenster B$_{C*}$ bezüglich C* = 5 ergibt sich ein Wert von mehr als 200 min.

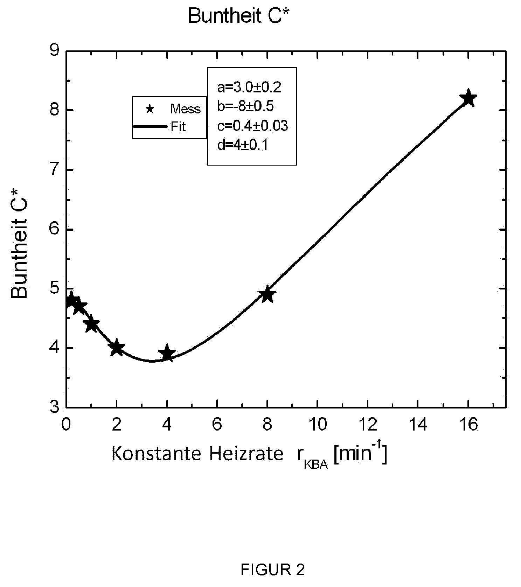

In der Figur 2 ist C* in Abhängigkeit von der dazugehörigen konstanten Heizrate r$_{KBA}$ im Temperaturbereich T1 bis T2 dargestellt. T1 beträgt in diesem Beispiel 680 °C und T2 beträgt 880 °C.

Aus den konstanten Heizraten r$_{KBA}$ errechnen sich Verweildauern t$_{KBA}$ gemäß t$_{KBA}$ = (T$_2$ - T$_1$) / r$_{KBA}$.

Die Verwendung unterschiedlicher Heizraten führt zu den gewünschten unterschiedlichen Verweildauern.

Auch die Messkurve der konstanten Heizraten lässt sich durch einen Fit beschreiben:

$$C*(r_{KBA}) = a \cdot \sqrt{r_{KBA}} + b \cdot (1 - \exp(-c \cdot r_{KBA})) + d$$

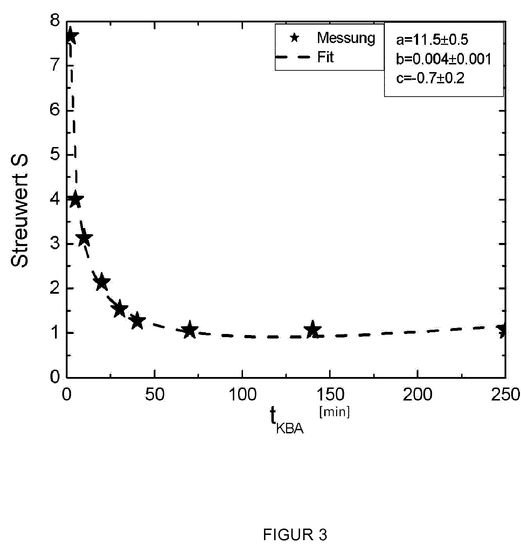

In der Figur 3 ist der Streuwert S in Abhängigkeit von der Verweildauer t$_{KBA}$ für das erfindungsgemäße Beispiel dargestellt.

Die Abhängigkeit des Streuwertes S von der Verweildauer t$_{KBA}$ lässt sich durch den Ansatz:

$$S(t_{KBA}) = \frac{a}{\sqrt{t_{KBA}}} + b \cdot t_{KBA} + c$$

fitten. Der erste Term charakterisiert die Reduzierung des Streuwertes S bei kleinen Keimbildungszeiten, der zweite Term quantifiziert die Zunahme des Streuwertes bei langen Keimbildungszeiten. Der Parameter a ist ein Maß für die Änderung der Farbe bei kurzen Keimbildungszeiten, der Parameter b beschreibt die Steilheit der Farbwertzunahme bei großen Keimbildungszeiten.

Der Parameter c ist ein Offset-Parameter und entscheidet mit darüber, welcher minimale Streuwert erreicht werden kann.

Um das Prozessfenster B$_S$ für z. B. S = 1,5 zu ermitteln, werden die Schnittpunkte der Konstanten bei S = 1,5 mit der Funktion S(t$_{KBA}$) ermittelt, bzw. aus der Funktion S(t$_{KBA}$) errechnet. Für das Prozessfenster B$_S$ ergibt sich ein Wert von mehr als 200 min.

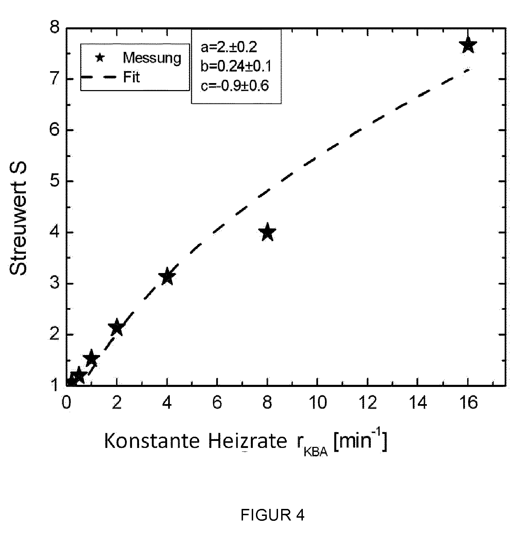

In der Figur 4 ist S in Abhängigkeit der dazugehörigen konstanten Heizrate r$_{KBA}$ dargestellt. Auch diese Messkurve lässt sich durch einen Fit beschreiben

$$S(r_{KBA}) = a \cdot \sqrt{r_{KBA}} + \frac{b}{r_{KBA}} + c$$

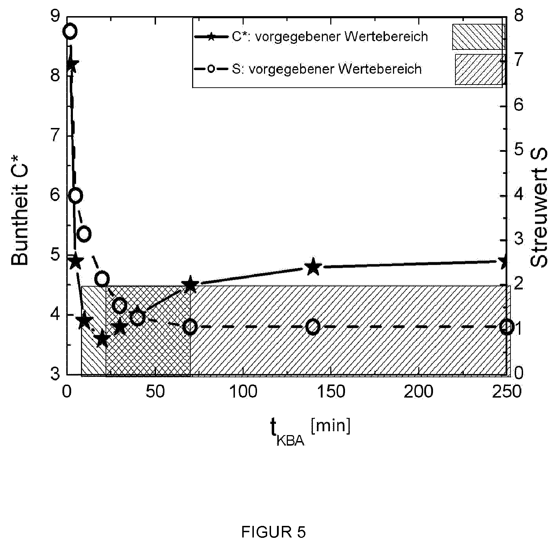

In der Figur 5 sind die Diagramme der Figuren 1 und 3 für das Beispiel C* = 4,5 und S = 2 zusammengeführt, um den Überschneidungsbereich (Prozessfenster B$_Ü$) zu ermitteln, der als Kreuzschraffur dargestellt ist.

Im Fenster B$_Ü$ werden sowohl C* = 4,5 als auch S = 2 eingehalten. Für B$_Ü$ ergeben sich 44 min.

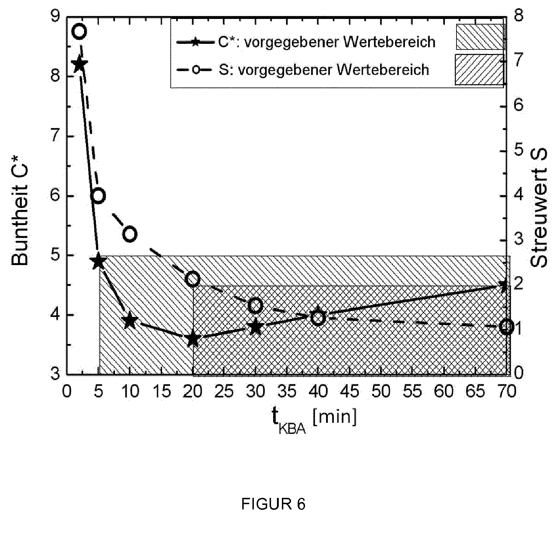

In der Figur 6 sind die Prozessfenster B$_{C*}$, B$_S$ und B$_Ü$ für die Werte C* = 5 und S = 2 dargestellt.

Für B$_Ü$ ergeben sich 55 min.

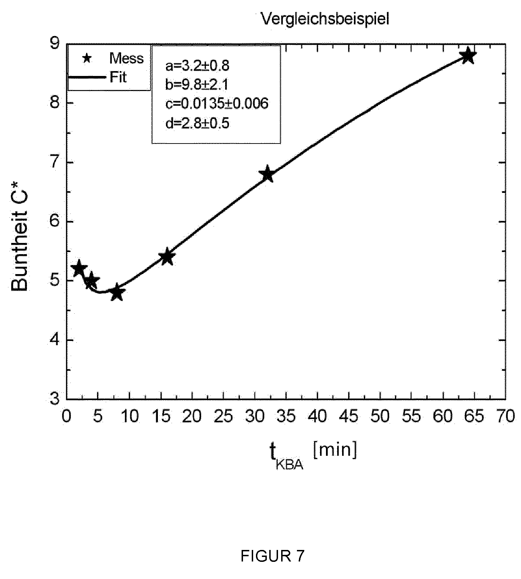

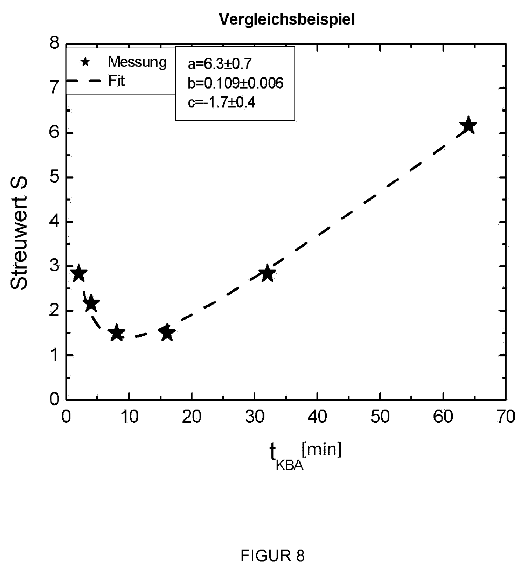

Die entsprechenden Diagramme für das Vergleichsglas sind in den Figuren 7 bis 9 dargestellt.

Beurteilung des Prozessfensters B$_{C*}$:

Für das Vergleichsbeispiel ergeben sich kleine Werte für a und große Werte für den Parameter b. Der Parameter c, der über das Abklingverhalten des zweiten Terms entscheidet, ist für das Vergleichsbeispiel kleiner, d.h. der zweite Term ist für große Zeiten t$_{KBA}$ wirksam.

Der Vergleich der Kurven/Fits zeigt, dass für das erfindungsgemäße Glas deutlich breitere Prozessfenster B$_{C*}$ hinsichtlich der Verweildauern t$_{KBA}$ vorliegen.

Für das erfindungsgemäße Glas ergibt sich beispielsweise B$_{C*}$ = Δt$_{KBAC*=5}$=200 min. Für das Vergleichsbeispiel ist B$_{C*}$ = Δt$_{KBAC*=5}$=7 min.

Für das erfindungsgemäße Glas ergibt sich beispielsweise B$_{C*}$ = Δt$_{KBAC*=4,8}$=100 min. Für das Vergleichsbeispiel ist B$_{C*}$ = Δt$_{KBAC*=4,8}$=1 min.

Beurteilung des Prozessfensters Bs:

Für das erfindungsgemäße Glas sind relativ große Parameter a und sehr kleine Werte für b charakteristisch. Für das Vergleichsbeispiel ergeben sich umgekehrt kleine Werte für a und große Werte für den Parameter b. Der Parameter c, der über das Abklingverhalten des zweiten Terms entscheidet, ist für das Vergleichsbeispiel kleiner, d.h. der zweite Term ist für große $t_{KBA}$ wirksam.

Der Vergleich der Kurven/Fits zeigt, dass für das erfindungsgemäße Glas deutlich breitere Prozessfenster $B_S$ hinsichtlich der Verweildauern $t_{KBA}$ vorliegen.

Für das erfindungsgemäße Glas ergibt sich beispielsweise $B_S = \Delta t_{KBAS=2} > 200$ min.

Für das Vergleichsbeispiel ist $B_S = \Delta t_{KBAS=2} = 16$ min.

Für das erfindungsgemäße Glas ergibt sich beispielsweise $B_S = \Delta t_{KBAS=1,5} > 200$ min.

Für das Vergleichsbeispiel ist $B_S = \Delta t_{KBAS=1,5} = 5$ min.

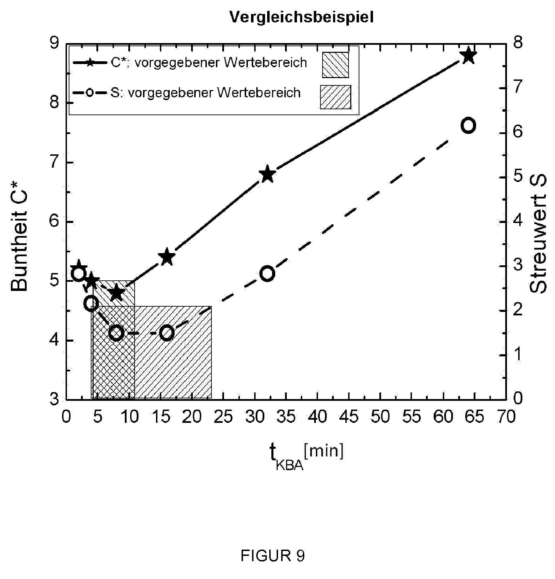

In Figur 9 beträgt der Überschneidungsbereich (Prozessfenster $B_Ü$) lediglich 7 min für C* = 5 und S = 2.

**Patentansprüche**

1. $Li_2O$-$Al_2O_3$-$SiO_2$-(LAS)-Glas für die Herstellung einer transparenten Glaskeramik,
   **dadurch gekennzeichnet,**
   **dass** es folgende Komponenten (in Gew.%) enthält:

   | | |
   |---|---|
   | $Al_2O_3$ | 19 - 23 |
   | $Fe_2O_3$ | 0,01 - 0,02 |
   | $Li_2O$ | 3,2 - 4,2 |
   | $P_2O_5$ | 0,01 - < 1,6 |
   | $SiO_2$ | 64 - 68 |
   | $SnO_2$ | 0 - 0,5 |
   | $TiO_2$ | 1,6 - 2,5 |
   | $ZnO$ | 1,0 - 2,5 |
   | $ZrO_2$ | 1,2 - 2,0 |

   wobei eine Bedingung B1:

   $$20 < (Li_2O + Al_2O_3 + SiO_2) / (SnO_2 + TiO_2 + ZrO_2 + Fe_2O_3) < 25 \text{ und}$$

   eine Bedingung B2 gilt:

   $$22 < (Li_2O + Al_2O_3 + SiO_2 + ZnO + P_2O_5) / (SnO_2 + TiO_2 + ZrO_2 + Fe_2O_3) < 26.$$

2. Transparente $Li_2O$-$AbO_3$-$SiO_2$-(LAS)-Glaskeramik,
   die Hochquarz- Mischkristalle als Hauptkristallphase aufweist, **dadurch gekennzeichnet,**
   **dass** sie folgende Komponenten (in Gew.%) enthält:

   | | |
   |---|---|
   | $Al_2O_3$ | 19 - 23 |
   | $Fe_2O_3$ | 0,01 - 0,02 |
   | $Li_2O$ | 3,2 - 4,2 |
   | $P_2O_5$ | 0,01 - < 1,6 |
   | $SiO_2$ | 64 - 68 |
   | $SnO_2$ | 0 - 0,5 |
   | $TiO_2$ | 1,6 - 2,5 |
   | $ZnO$ | 1,0 - 2,5 |
   | $ZrO_2$ | 1,2 - 2,0 |

   wobei eine Bedingung B1 gilt:

$$20 < (Li_2O + Al_2O_3 + SiO_2) / (SnO_2 + TiO_2 + ZrO_2 + Fe_2O_3) < 25 \text{ und}$$

eine Bedingung B2 gilt:

$$22 < (Li_2O + Al_2O_3 + SiO_2 + ZnO + P_2O_5) / (SnO_2 + TiO_2 + ZrO_2 + Fe_2O_3) < 26.$$

3. Glas oder Glaskeramik, nach einem der Ansprüche 1 oder 2, **dadurch gekennzeichnet, dass** folgende Komponenten (in Gew.-%) enthalten sind:

| | |
|---|---|
| $Al_2O_3$ | 21,0-21,7 |
| $As_2O_3$ | < 0,05 |
| BaO | 0,2 - 0,8 |
| CaO | 0,1 - 0,4 |
| $Fe_2O_3$ | 0,01 - 0,016 |
| $K_2O$ | 0,05-0,2 |
| $Li_2O$ | 3,6-3,9 |
| MgO | 0,5-0,8 |
| $Na_2O$ | 0,3 - 0,7 |
| $Nd_2O_3$ | 0,02-0,07 |
| $P_2O_5$ | 0,01 - 0,1 |
| $Sb_2O_3$ | < 0,05 |
| $SiO_2$ | 65,5 - 67,5 |
| $SnO_2$ | 0,08 - 0,16 |
| $TiO_2$ | 2,0 - 2,4 |
| ZnO | 1,6 - 1,9 |
| $ZrO_2$ | 1,6 - 1,9 |
| SrO | 0,3 - 0,7 |

4. $Li_2O$-$Al_2O_3$-$SiO_2$-(LAS)-Glas für die Herstellung einer transparenten Glaskeramik, **dadurch gekennzeichnet, dass** es folgende Komponenten (in Gew.%) enthält:

| | |
|---|---|
| $Al_2O_3$ | 19 - 23 |
| $Fe_2O_3$ | 0,01 - 0,02 |
| $Li_2O$ | 3,2 - 4,2 |
| $P_2O_5$ | 0,01 - < 1,6 |
| $SiO_2$ | 64 - 68 |
| $SnO_2$ | 0 - 0,5 |
| $TiO_2$ | 1,5 - 3,0 |
| ZnO | 1,0 - 2,5 |
| $ZrO_2$ | 1,2 - 2,0 |
| MgO | 0,5 - 0,8 |

wobei eine Bedingung B3 gilt:

$$21 < (Li_2O + Al_2O_3 + SiO_2 + ZnO + P_2O_5 + MgO) / (SnO_2 + TiO_2 + ZrO_2 + Fe_2O_3) < 26.$$

5. Transparente $Li_2O$-$Al_2O_3$-$SiO_2$-(LAS)-Glaskeramik,
die Hochquarz- Mischkristalle als Hauptkristallphase aufweist,
**dadurch gekennzeichnet,**
**dass** sie folgende Komponenten (in Gew.%) enthält:

| | |
|---|---|
| $Al_2O_3$ | 19 - 23 |
| $Fe_2O_3$ | 0,01 - 0,02 |
| $Li_2O$ | 3,2 - 4,2 |
| $P_2O_5$ | 0,01 - < 1,6 |
| $SiO_2$ | 64 - 68 |
| $SnO_2$ | 0 - 0,5 |
| $TiO_2$ | 1,5 - 3,0 |
| ZnO | 1,0 - 2,5 |
| $ZrO_2$ | 1,2 - 2,0 |
| MgO | 0,5 - 0,8 |

wobei eine Bedingung B3 gilt::

$$21 < (Li_2O + Al_2O_3 + SiO_2 + ZnO + P_2O_5 + MgO) / (SnO_2 + TiO_2 + ZrO_2 + Fe_2O_3) < 26.$$

6. Glas oder Glaskeramik nach einem der Ansprüche 1 bis 5, **gekennzeichnet durch** 0,05 bis 0,5 Gew.-% $SnO_2$.

7. Glas oder Glaskeramik nach einem der Ansprüche 1 bis 6, **gekennzeichnet durch** 0,01 bis 0,1 Gew.-% $Nd_2O_3$.

8. Glas oder Glaskeramik, nach einem der Ansprüche 1 bis 7, **gekennzeichnet durch** 0,05 - 0,7 Gew.-% SrO.

**Claims**

1. $Li_2O$-$Al_2O_3$-$SiO_2$ (LAS) glass for producing a transparent glass-ceramic, **characterized in that** it contains the following components (in % by weight):

| | |
|---|---|
| $Al_2O_3$ | 19-23 |
| $Fe_2O_3$ | 0.01-0.02 |
| $Li_2O$ | 3.2-4.2 |
| $P_2O_5$ | 0.01 - < 1.6 |
| $SiO_2$ | 64-68 |
| $SnO_2$ | 0-0.5 |
| $TiO_2$ | 1.6-2.5 |
| ZnO | 1.0-2.5 |
| $ZrO_2$ | 1.2-2.0 |

where a condition B1:

$$20 < (Li_2O + Al_2O_3 + SiO_2)/(SnO_2 + TiO_2 + ZrO_2 + Fe_2O_3) < 25 \text{ and}$$

a condition B2:

$$22 < (Li_2O + Al_2O_3 + SiO_2 + ZnO + P_2O_5)/(SnO_2 + TiO_2 + ZrO_2 + Fe_2O_3) < 26,$$

apply.

2. Transparent $Li_2O$-$Al_2O_3$-$SiO_2$ (LAS) glass-ceramic having high-quartz mixed crystals as main crystal phase, **characterized in that** it contains the following components (in % by weight):

| | |
|---|---|
| $Al_2O_3$ | 19-23 |
| $Fe_2O_3$ | 0.01-0.02 |
| $Li_2O$ | 3.2-4.2 |
| $P_2O_5$ | 0.01 - < 1.6 |
| $SiO_2$ | 64-68 |
| $SnO_2$ | 0-0.5 |
| $TiO_2$ | 1.6-2.5 |
| $ZnO$ | 1.0-2.5 |
| $ZrO_2$ | 1.2-2.0 |

where a condition B1:

$$20 < (Li_2O + Al_2O_3 + SiO_2)/(SnO_2 + TiO_2 + ZrO_2 + Fe_2O_3) < 25 \text{ and}$$

a condition B2:

$$22 < (Li_2O + Al_2O_3 + SiO_2 + ZnO + P_2O_5)/(SnO_2 + TiO_2 + ZrO_2 + Fe_2O_3) < 26,$$

apply.

3. Glass or glass-ceramic according to either Claim 1 or 2, **characterized in that** the following components (in % by weight) are present:

| | |
|---|---|
| $Al_2O_3$ | 21.0-21.7 |
| $As_2O_3$ | < 0.05 |
| $BaO$ | 0.2-0.8 |
| $CaO$ | 0.1-0.4 |
| $Fe_2O_3$ | 0.01-0.016 |
| $K_2O$ | 0.05-0.2 |
| $Li_2O$ | 3.6-3.9 |
| $MgO$ | 0.5-0.8 |
| $Na_2O$ | 0.3-0.7 |
| $Nd_2O_3$ | 0.02-0.07 |
| $P_2O_5$ | 0.01-0.1 |
| $Sb_2O_3$ | < 0.05 |
| $SiO_2$ | 65.5-67.5 |
| $SnO_2$ | 0.08-0.16 |
| $TiO_2$ | 2.0-2.4 |
| $ZnO$ | 1.6-1.9 |
| $ZrO_2$ | 1.6-1.9 |

(continued)

| | |
|---|---|
| SrO | 0.3-0.7. |

4. Li$_2$O-Al$_2$O$_3$-SiO$_2$ (LAS) glass for producing a transparent glass-ceramic, **characterized in that** it contains the following components (in % by weight):

| | |
|---|---|
| Al$_2$O$_3$ | 19-23 |
| Fe$_2$O$_3$ | 0.01-0.02 |
| Li$_2$O | 3.2-4.2 |
| P$_2$O$_5$ | 0.01 - < 1.6 |
| SiO$_2$ | 64-68 |
| SnO$_2$ | 0-0.5 |
| TiO$_2$ | 1.5-3.0 |
| ZnO | 1.0-2.5 |
| ZrO$_2$ | 1.2-2.0 |
| MgO | 0.5-0.8 |

where a condition B3:

$$21 < (\text{Li}_2\text{O} + \text{Al}_2\text{O}_3 + \text{SiO}_2 + \text{ZnO} + \text{P}_2\text{O}_5 + \text{MgO})/(\text{SnO}_2 + \text{TiO}_2 + \text{ZrO}_2 + \text{Fe}_2\text{O}_3) < 26,$$

applies.

5. Transparent Li$_2$O-Al$_2$O$_3$-SiO$_2$ (LAS) glass-ceramic having high-quartz mixed crystals as main crystal phase, **characterized in that** it contains the following components (in % by weight):

| | |
|---|---|
| Al$_2$O$_3$ | 19-23 |
| Fe$_2$O$_3$ | 0.01-0.02 |
| Li$_2$O | 3.2-4.2 |
| P$_2$O$_5$ | 0.01 - < 1.6 |
| SiO$_2$ | 64-68 |
| SnO$_2$ | 0-0.5 |
| TiO$_2$ | 1.5-3.0 |
| ZnO | 1.0-2.5 |
| ZrO$_2$ | 1.2-2.0 |
| MgO | 0.5-0.8 |

where a condition B3:

$$21 < (\text{Li}_2\text{O} + \text{Al}_2\text{O}_3 + \text{SiO}_2 + \text{ZnO} + \text{P}_2\text{O}_5 + \text{MgO})/(\text{SnO}_2 + \text{TiO}_2 + \text{ZrO}_2 + \text{Fe}_2\text{O}_3) < 26,$$

applies.

6. Glass or glass-ceramic according to any of Claims 1 to 5, **characterized by** from 0.05 to 0.5% by weight of SnO$_2$.

7. Glass or glass-ceramic according to any of Claims 1 to 6, **characterized by** from 0.01 to 0.1% by weight of Nd$_2$O$_3$.

8. Glass or glass-ceramic according to any of Claims 1 to 7, **characterized by** from 0.05-0.7% by weight of SrO.

**Revendications**

1. Verre $Li_2O$-$Al_2O_3$-$SiO_2$ (LAS) pour la préparation d'une vitrocéramique transparente, **caractérisé en ce qu'**il contient les composants suivants (en % en poids) :

| | |
|---|---|
| $Al_2O_3$ | 19 - 23 |
| $Fe_2O_3$ | 0, 01 - 0,02 |
| $Li_2O$ | 3,2 - 4,2 |
| $P_2O_5$ | 0, 01 - < 1,6 |
| $SiO_2$ | 64 - 68 |
| $SnO_2$ | 0 - 0,5 |
| $TiO_2$ | 1,6 - 2,5 |
| $ZnO$ | 1,0 - 2,5 |
| $ZrO_2$ | 1,2 - 2,0 |

une condition B1 :

$$20 < (Li_2O + Al_2O_3 + SiO_2)/(SnO_2 + TiO_2 + ZrO_2 + Fe_2O_3) < 25 \text{ et}$$

une condition B2 :

$$22 < (Li_2O + Al_2O_3 + SiO_2 + ZnO + P_2O_5)/(SnO_2 + TiO_2 + ZrO_2 + Fe_2O_3) < 26$$

étant d'application.

2. Vitrocéramique $Li_2O$-$Al_2O_3$-$SiO_2$ (LAS) transparente, qui présente des cristaux mixtes de quartz bêta comme phase cristalline principale, **caractérisée en ce qu'**elle contient les composants suivants (en % en poids) :

| | |
|---|---|
| $Al_2O_3$ | 19 - 23 |
| $Fe_2O_3$ | 0, 01 - 0,02 |
| $Li_2O$ | 3,2 - 4,2 |
| $P_2O_5$ | 0,01 - <1,6 |
| $SiO_2$ | 64 - 68 |
| $SnO_2$ | 0 - 0,5 |
| $TiO_2$ | 1,6 - 2,5 |
| $ZnO$ | 1,0 - 2,5 |
| $ZrO_2$ | 1,2 - 2,0 |

une condition B1 :

$$20 < (Li_2O + Al_2O_3 + SiO_2)/(SnO_2 + TiO_2 + ZrO_2 + Fe_2O_3) < 25 \text{ et}$$

une condition B2 :

$$22 < (Li_2O + Al_2O_3 + SiO_2 + ZnO + P_2O_5)/(SnO_2 + TiO_2 + ZrO_2 + Fe_2O_3) < 26$$

étant d'application.

3. Verre ou vitrocéramique selon l'une quelconque des revendications 1 ou 2, caractérisé(e) en ce que les composants suivants (en % en poids) sont contenus :

| | |
|---|---|
| $Al_2O_3$ | 21,0 - 21,7 |
| $As_2O_3$ | < 0,05 |
| BaO | 0,2 - 0,8 |
| CaO | 0,1 - 0,4 |
| $Fe_2O_3$ | 0,01 - 0,016 |
| $K_2O$ | 0,05 - 0,2 |
| $Li_2O$ | 3,6 - 3,9 |
| MgO | 0,5 - 0,8 |
| $Na_2O$ | 0,3 - 0,7 |
| $Nd_2O_3$ | 0,02 - 0,07 |
| $P_2O_5$ | 0,01 - 0,1 |
| $Sb_2O_3$ | < 0,05 |
| $SiO_2$ | 65,5 - 67,5 |
| $SnO_2$ | 0,08 - 0,16 |
| $TiO_2$ | 2,0 - 2,4 |
| ZnO | 1,6 - 1,9 |
| $ZrO_2$ | 1,6 - 1,9 |
| SrO | 0,3 - 0,7 |

4. Verre $Li_2O$-$Al_2O_3$-$SiO_2$ (LAS) pour la préparation d'une vitrocéramique transparente, **caractérisé en ce qu'**il contient les composants suivants (en % en poids) :

| | |
|---|---|
| $Al_2O_3$ | 19 - 23 |
| $Fe_2O_3$ | 0, 01 - 0,02 |
| $Li_2O$ | 3,2 - 4,2 |
| $P_2O_5$ | 0, 01 - < 1,6 |
| $SiO_2$ | 64 - 68 |
| $SnO_2$ | 0 - 0,5 |
| $TiO_2$ | 1,5 - 3,0 |
| ZnO | 1,0 - 2,5 |
| $ZrO_2$ | 1,2 - 2,0 |
| MgO | 0,5 - 0,8 |

une condition B3 :

$$21 < (Li_2O + Al_2O_3 + SiO_2 + ZnO + P_2O_5 + MgO)/(SnO_2 + TiO_2 + ZrO_2 + Fe_2O_3) < 26$$

étant d'application.

5. Vitrocéramique $Li_2O$-$Al_2O_3$-$SiO_2$ (LAS) transparente, qui présente des cristaux mixtes de quartz bêta comme phase cristalline principale, **caractérisée en ce qu'**elle contient les composants suivants (en % en poids) :

| | |
|---|---|
| $Al_2O_3$ | 19 - 23 |
| $Fe_2O_3$ | 0, 01 - 0,02 |
| $Li_2O$ | 3,2 - 4,2 |
| $P_2O_5$ | 0, 01 - < 1,6 |
| $SiO_2$ | 64 - 68 |

(suite)

| | |
|---|---|
| $SnO_2$ | 0 - 0,5 |
| $TiO_2$ | 1,5 - 3,0 |
| ZnO | 1,0 - 2,5 |
| $ZrO_2$ | 1,2 - 2,0 |
| MgO | 0,5 - 0,8 |

une condition B3 :

$$21 < (Li_2O + Al_2O_3 + SiO_2 + ZnO + P_2O_5 + MgO)/(SnO_2 + TiO_2 + ZrO_2 + Fe_2O_3) < 26$$

étant d'application.

6. Verre ou vitrocéramique selon l'une quelconque des revendications 1 à 5, caractérisé(e) par 0,05 à 0,5% en poids de $SnO_2$.

7. Verre ou vitrocéramique selon l'une quelconque des revendications 1 à 6, caractérisé(e) par 0,01 à 0,1% en poids de $Nd_2O_3$.

8. Verre ou vitrocéramique selon l'une quelconque des revendications 1 à 7, caractérisé(e) par 0,05 à 0,7% en poids de SrO.

FIGUR 1

FIGUR 2

FIGUR 3

FIGUR 4

FIGUR 5

FIGUR 6

FIGUR 7

Vergleichsbeispiel

★ Messung
— — Fit

a=6.3±0.7
b=0.109±0.006
c=-1.7±0.4

Streuwert S

$t_{KBA}$ [min]

FIGUR 8

**Vergleichsbeispiel**

FIGUR 9

**EP 3 010 865 B1**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008065167 A1
- WO 2008065166 A1
- JP 11228180 A
- JP 11228181 A
- EP 1837312 A1
- EP 1837312 B1
- EP 1837314 B1

**In der Beschreibung aufgeführte Nicht-Patentliteratur**

- **SAKAMOTO et al.** Structural relaxation and optical properties in nanocrystalline $\beta$-quartz glass-ceramic. *Journal of Non-Crystalline Solids,* 2006, vol. 352, 514-518